# EUROPÄISCHE PATENTANMELDUNG

(11) **EP 2 375 088 A2**
(43) Veröffentlichungstag der Anmeldung: **12.10.2011**
(21) Anmeldenummer: 11155121.4
(22) Anmeldetag: 21.02.2011
(51) Int. Cl.: F16B 35/04, F16B 37/12

(54) **Befestigungseinrichtung zum kraftschlüssigen Verbinden zweier Werkstücke sowie Verwendung einer Befestigungseinrichtung**

(30) Priorität: 09.04.2010 DE 102010014318
(71) Anmelder: Siemens Aktiengesellschaft, 80333 Munich (DE)
(72) Erfinder: Geist, Richard, 91207, Lauf (DE)

(57) **Zusammenfassung**

Die vorliegende Erfindung betrifft eine Befestigungseinrichtung (1) zum kraftschlüssigen Verbinden zweier Werkstücke (21, 22) aneinander, umfassend ein Spannelement (2) zum Verbinden der Werkstücke (21, 22), wobei das Spannelement (2) ein erstes Außengewinde (3), ein zweites Außengewinde (5) und einen zwischen dem ersten (3) und dem zweiten Außengewinde (5) angeordneten elastisch dehnbaren Schaft (4) aufweist, und wenigstens eine Rohrmutter (6) mit einem Innengewinde (7) zur Aufnahme eines der Außengewinde (3, 5) des Spannelementes (2), wobei die wenigstens eine Rohrmutter (6) ein Außengewinde (8) mit einer gradlinig oder annähernd geradlinig ausgebildeten Gewindeflanke (9) aufweist, wobei die zumindest eine gradlinig oder annähernd geradlinig ausgebildete Gewindeflanke (9) derart an der wenigstens einen Rohrmutter (6) angeordnet ist, dass sie im Befestigungszustand der wenigstens einen Rohrmutter (6) an einem der beiden Außengewinde (3, 5) des Spannelementes (2) dem anderen Außengewinde (3, 5) des Spannelementes (2) zugewandt ist. Ferner betrifft die Erfindung eine Verwendung einer derartigen Befestigungseinrichtung (1) zum kraftschlüssigen Verbinden zweier Gehäuseelemente (21, 22) einer Turbomaschine, insbesondere einer Dampfturbine.

## Beschreibung

Die vorliegende Erfindung betrifft eine Befestigungseinrichtung zum kraftschlüssigen Verbinden zweier Werkstücke miteinander, umfassend ein Spannelement zum Verbinden der Werkstücke, wobei das Spannelement ein erstes Außengewinde, ein zweites Außengewinde und einen zwischen dem ersten und dem zweiten Außengewinde angeordneten elastisch dehnbaren Schaft aufweist, und wenigstens eine Rohrmutter mit einem Innengewinde zur Aufnahme eines der Außengewinde des Spannelementes. Ferner betrifft die Erfindung die Verwendung einer Befestigungseinrichtung zum kraftschlüssigen Verbinden zweier Gehäuseelemente einer Turbomaschine.

Bei Turbomaschinen, wie beispielsweise Gas- oder Dampfturbinen, ist es praktisch unmöglich, die Wärmeausdehnung sehr heiß werdender Gehäuseelemente, wie beispielsweise Leitschaufelträger, in allen Betriebszuständen gleichmäßig zu halten. Es können daher an Teilfugen zwischen Gehäuseelementen große thermische Spannungen auftreten, die sehr hohe Anforderungen an Teilfugenverbindungen stellen.

Zur Verbindung der Gehäuseelemente miteinander sind Schweißverbindungen, Verschraubungen an Flanschen, Verbindungen mit Hilfe von Keilklemmen, Klauen und Klammerelemente oder Schrumpfringe bekannt.

Bevorzugte Befestigungseinrichtungen, wie beispielsweise sogenannte Teilfugenverbinder, sind während des Betriebs teilweise sehr hohen Temperaturen ausgesetzt. Bei Dampftemperaturen von beispielsweise über 500 °C können die zusammengehaltenen Gehäuseelemente einer Dampfturbine ebenfalls eine Temperatur von 500 °C und mehr erreichen, sodass beispielsweise an einem Flansch der Gehäuseelemente angeordnete Befestigungseinrichtungen im Inneren des Flanschs annähernd so hohe Temperaturen erreichen. Um eine Teilfuge unter allen Betriebsbedingungen dicht zu halten, werden derartige Befestigungseinrichtungen daher thermisch elastisch gestaltet. Hierzu werden die Spannelemente, die die Gehäuseelemente zusammenhalten, beispielsweise als Spannbolzen mit einem Dehnschaft, insbesondere als sogenannte Dehnschraube, ausgeführt. Zusätzlich ist es bekannt, Dehnhülsen zu verwenden, die im Kraftfluss der Vorspannkraft um die Spannbolzen angeordnet sind, um die Verbindung bei instationären Temperaturdehnungen elastischer zu machen.

Das heißt, um die Fuge bzw. Teilfuge zwischen zwei Gehäuseelementen dauerhaft dicht zu halten, ist es bekannt, derartige Befestigungseinrichtungen, insbesondere Teilfugenverbinder, mit einer Vorspannung zu beaufschlagen, sodass die Befestigungseinrichtungen auch bei einer thermischen Längung und anschließenden Schrumpfung während des Betriebs der Turbomaschine die Fuge beziehungsweise Teilfuge sicher zusammenhalten und eine Dichtigkeit der Turbomaschine sicherstellen.

Zum Aufbringen der Vorspannung ist es daher bekannt, Spannelemente der Befestigungseinrichtungen torsionsfrei zu dehnen und im gedehnten Zustand an die Gehäuseelemente anzulegen. Um große Spannelemente, wie sie zum Halten von Teilfugen an Turbomaschinen notwendig sind, gezielt vorzuspannen, werden diese durch Erhitzung gelängt, im erhitzten Zustand an die Gehäuseelemente angelegt und dort abgekühlt, sodass sie sich verkürzen und unter Vorspannung an den Gehäuseelementen anliegen. Da die Erhitzung zeitaufwendig ist und die Vorspanngenauigkeit schwer einstellbar ist, werden Spannelemente derartiger Befestigungseinrichtungen zunehmend mit hydraulischen Geräten gedehnt und unter Vorspannung an die Gehäuseelemente gesetzt.

Derartige Befestigungseinrichtungen zum Verbinden zweier Werkstücke miteinander, wobei die Befestigung der zwei Werkstücke aneinander über ein Spannelement erfolgt, sind bekannt. Das heißt, dort ist eine Befestigungseinrichtung in Form eines thermoelastischen Fugenverbinders bekannt, der zum kraftschlüssigen Verbinden zweier Gehäuseelemente einer Turbomaschine ausgebildet ist. Der thermoelastische Fugenverbinder umfasst ein Spannelement zum Verbinden der Gehäuseelemente und zum Übertragen einer Vorspannkraft zum Anpressen der Gehäuseelemente gegeneinander.

An den Befestigungseinrichtungen der Gehäuseteilfugen gibt es insbesondere zwei kritische Stellen, die bei der Auslegung und Berechnung eine wichtige Rolle spielen. Zum einen ist es das Einschraubgewinde und zum anderen ist es die Auflagefläche zur Aufnahme der Rohrmutter beziehungsweise der Dehnhülse an einem Gehäuseelement, das heißt am Gehäuseflansch. Da der Schrauben- beziehungsweise der Rohrmutternwerkstoff, im Vergleich zum Stahlguss des Turbinengehäuses, oft wesentlich höhere Festigkeitswerte hat, müssen diese Verbindungsstellen zwischen der Rohrmutter beziehungsweise der Dehnhülse sehr genau geprüft werden. Selbst kleinste Verformungen, durch Fließen an diesen Auflagestellen, führen sehr schnell zum Verlust der Vorspannkräfte und die Teilfuge wird undicht. So kommt es häufig vor, dass die möglichen Schraubenkräfte nicht voll ausgenutzt werden können, da es der schlechte Gehäusewerkstoff nicht zulässt.

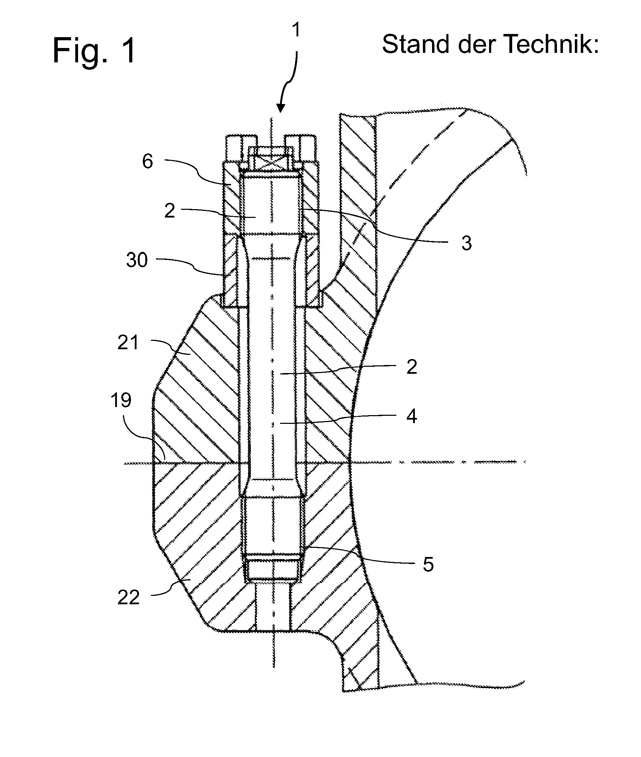

In Fig. 1 ist in einer Seitenansicht ein Schnitt durch eine als Teilfugenverbinder ausgebildete Befestigungseinrichtung 1 gemäß dem Stand der Technik dargestellt. Der Teilfugenverbinder 1 weist ein als Dehnschraube ausgebildetes Spannelement 2 auf. Das Spannelement 2 weist ein erstes Außengewinde 3, ein zweites Außengewinde 5 sowie einen elastisch dehnbaren Schaft 4 zwischen dem ersten 3 und dem zweiten Außengewinde 5 auf. Die Befestigungseinrichtung 1 dient zur Befestigung zweier Gehäuseelemente 21, 22 einer Turbomaschine aneinander. Durch die Befestigungseinrichtung 1 soll die Teilfuge 19 zwischen dem ersten Gehäuseelement 21 und dem zweiten Gehäuseelement 22 abgedichtet werden. Zur Überleitung der Vorspannungskraft ist eine Dehnhülse 30 vorgesehen, die zwischen einer Rohrmutter 6 des Teilfugenverbinder 1 und eine Anlagefläche an dem ersten Gehäuseelement 21 angeordnet ist. Nachteilig hierbei ist, wie bereits zuvor erwähnt, dass die gesamte Kraftübertragung von dem stirnseitigen Ende der Dehnhülse 30 zu dem Gehäuseelement 21 erfolgt. Kleinste Verformungen an der Verbindungsstelle zwischen dem stirnseitigen Ende der Dehnhülse 30 und der Anlagefläche an dem ersten Gehäuseelement 21 können zu Undichtigkeiten an der Teilfuge 19 führen. Da die Verbindungsstelle relativ kleinflächig ausgebildet ist, können die Vorspannkräfte des Spannelementes 2 nicht vollständig ausgenutzt werden, da aufgrund des in der Regel schlechteren Werkstoffs des Gehäuseelementes 21 beim Auftreten hoher Kräfte leicht Verformungen an der Anlagefläche an dem ersten Gehäuseelement 21 auftreten können.

Aufgabe der Erfindung ist es daher, eine Befestigungseinrichtung zum kraftschlüssigen Verbinden zweier Werkstücke, insbesondere zweier Gehäuseelemente einer Turbomaschine, aneinander zu schaffen, durch die zuvor abgesprochenen Nachteile des Standes der Technik vermieden werden können. Insbesondere soll eine einfache und unter thermischer Belastung zuverlässig dicht haltende Befestigungseinrichtung zum kraftschlüssigen Verbinden zweier Werkstücke, insbesondere zweier Gehäuseelemente, aneinander geschaffen werden.

Diese Aufgabe wird erfindungsgemäß durch eine Befestigungseinrichtung zum kraftschlüssigen Verbinden zweier Werkstücke mit den Merkmalen gemäß dem unabhängigen Patentanspruch 1 sowie durch die Verwendung einer Befestigungseinrichtung mit den Merkmalen gemäß dem unabhängigen Patentanspruch 12 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Befestigungseinrichtung beschrieben sind, selbstverständlich auch im Zusammenhang mit der erfindungsgemäßen Verwendung einer Befestigungseinrichtung, und jeweils umgekehrt, sodass bezüglich der Offenbarung zu den einzelnen Erfindungsaspekten stets wechselseitig Bezug genommen werden kann.

Gemäß dem ersten Aspekt der Erfindung wird die Aufgabe durch eine Befestigungseinrichtung zum kraftschlüssigen Verbinden zweier Werkstücke aneinander, umfassend ein Spannelement zum Verbinden der Werkstücke, wobei das Spannelement ein erstes Außengewinde, ein zweites Außengewinde und einen zwischen dem ersten und dem zweiten Außengewinde angeordneten elastisch dehnbaren Schaft aufweist, und wenigstens eine Rohrmutter mit einem Innengewinde zur Aufnahme eines der Außengewinde des Spannelementes, gelöst, wobei die wenigstens eine Rohrmutter ein Außengewinde mit einer gradlinig oder annähernd geradlinig ausgebildeten Gewindeflanke aufweist, wobei die zumindest eine gradlinig oder annähernd geradlinig ausgebildete Gewindeflanke derart an der wenigstens einen Rohrmutter angeordnet ist, dass sie im Befestigungszustand der wenigstens einen Rohrmutter an einem der beiden Außengewinde des Spannelementes dem anderen Außengewinde des Spannelementes zugewandt ist.

Eine derartig ausgebildete Befestigungseinrichtung stellt eine einfache und gleichzeitig unter thermischer Belastung zuverlässig dicht haltende Befestigungseinrichtung dar. So ermöglicht eine derartige Befestigungseinrichtung die sichere Befestigung zweier Werkstücke, wie beispielsweise zweier Gehäuseelemente einer Turbomaschine, insbesondere einer Dampfturbine, aneinander. Durch die spezielle Ausgestaltung der Befestigungseinrichtung gewährleistet diese insbesondere eine dauerhaft dichte Verbindung zweier Gehäuseelemente einer Turbomaschine auch dann aneinander, wenn die Gehäuseelemente einer hohen thermischen Belastung ausgesetzt sind.

Die Befestigungseinrichtung zum kraftschlüssigen Verbinden zweier Werkstücke, insbesondere zweier Gehäuseelemente einer Turbomaschine, aneinander, umfasst ein Spannelement zum Verbinden der Werkstücke sowie wenigstens eine Rohrmutter zur Aufnahme des Spannelementes. Das Spannelement weist ein erstes Außengewinde, ein zweites Außengewinde und einen zwischen dem ersten und dem zweiten Außengewinde angeordneten elastisch dehnbaren Schaft auf. Das Spannelement ist vorzugsweise als Dehnschraube ausgebildet. Eine Dehnschraube stellt im Sinne der Erfindung eine Schraube dar, die im Einsatz auftretende, wechselnde Kraft und Längenänderungen durch eine elastische Dehnung ihres Schaftes aufnehmen kann. Der Schaft wird durch den zylindrischen Teil der Schraube, der zwischen dem ersten und dem zweiten Außengewinde angeordnet ist, gebildet. Der Schaft eines derartigen Spannelementes beziehungsweise einer derartigen Dehnschraube ist im Vergleich zu einer normalen Standardschraube relativ lang ausgebildet, um Verformungsarbeit aufzunehmen. Der Kerndurchmesser des Schaftes des Spannelementes ist geringer als der Durchmesser des Spannelementes im Bereich der Außengewinde. Die wenigstens eine Rohrmutter weist ein Innengewinde zur Aufnahme eines der Außengewinde des Spannelementes auf. Ferner weist die wenigstens eine Rohrmutter ein Außengewinde auf, über das die Rohrmutter an einem Werkstück, insbesondere an einem Gehäuseelement einer Turbomaschine, befestigt werden kann. Das Werkstück beziehungsweise das Gehäuseelemente weist zur Aufnahme der wenigstens einen Rohrmutter eine oder mehrere Bohrungen auf. Das Außengewinde der Rohrmutter ist dadurch gekennzeichnet, dass dieses eine gradlinig oder annähernd geradlinig ausgebildete Gewindeflanke aufweist. Dabei ist die gradlinig oder annähernd geradlinig ausgebildete Gewindeflanke derart an wenigstens einer Rohrmutter angeordnet, dass sie im Befestigungszustand der wenigstens einen Rohrmutter an einem der beiden Außengewinde des Spannelementes dem anderen Außengewinde des Spannelementes zugewandt ist.

Durch eine derartige Ausbildung der Gewindeflanke des Außengewindes der wenigstens einen Rohrmutter ist gewährleistet, dass beim Befestigen der Befestigungseinrichtung und damit der wenigstens einen Rohrmutter an ein Werkstück, insbesondere an ein Gehäuseelement einer Turbomaschine, die gradlinig oder annähernd geradlinig ausgebildete Gewindeflanke des Außengewindes an dem entsprechend komplementären Gewinde in dem Werkstück beziehungsweise dem Gehäuseelement anliegt. Durch das speziell ausgebildete Außengewinde der wenigstens einen Rohrmutter ist gewährleistet, dass die Kraftübertragung von der wenigstens einen Rohrmutter zu dem Werkstück, insbesondere dem Gehäuseelement der Turbomaschine, von dem gesamten Außengewinde sowie einer Stirnseite der wenigstens einen Rohrmutter übertragen werden kann.

Die wenigstens eine Rohrmutter der Befestigungseinrichtung ermöglicht aufgrund ihres speziellen Außengewindes eine sehr gute Krafteinleitung in das Werkstück beziehungsweise in den Gehäuseflansch des Gehäuseelementes. Durch die gradlinig oder annähernd geradlinig ausgebildete Gewindeflanke des Außengewindes weist dieses, im Vergleich zu einer Dehnhülse, eine sehr große Auflagefläche beziehungsweise Anlagefläche auf. Die Kraftübertragung von der Rohrmutter auf ein Werkstück beziehungsweise ein Gehäuseelement erfolgt nicht nur über die Stirnseite, wie bei einer Dehnhülse, sondern zusätzlich über das gesamte Außengewinde. Durch die Verteilung der Auflagefläche der Rohrmutter zu dem Werkstück beziehungsweise zu dem Gehäuseelement kann eine bessere und gleichmäßigere Krafteinleitung der Schraubenkräfte von der Rohrmutter auf das Werkstück beziehungsweise auf das Gehäuseelement erfolgen. Im Gegensatz zu einer Dehnhülse, bei der die Kraft lediglich an der Stirnseite der Dehnhülse auf das Werkstück beziehungsweise das Gehäuseelement übertragen wird, kann die kritische Stelle der Verbindung deutlich entschärft werden.

Gradlinig ausgebildete Gewindeflanke bedeutet im Sinne der Erfindung, dass diese eine gleichmäßige Steigung aufweist. Annähernd geradlinig ausgebildete Gewindeflanke bedeutet im Sinne der Erfindung, dass die Gewindeflanke einen leicht gewölbten Verlauf aufweisen kann.

Eine derartige Befestigungseinrichtung ermöglicht, dass man sich bei der Auslegung der Befestigungseinrichtung auf das Spannelement, insbesondere die Dehnschraube, konzentriert und deren Festigkeit voll ausnutzen kann, ohne auf die Anlagefläche der Rohrmutter zu dem Werkstück beziehungsweise dem Gehäuseelement Rücksicht nehmen zu müssen.

Vorteile einer derartigen Befestigungseinrichtung sind die hohe und gleichmäßig verteilte Krafteinleitung der Schraubenkräfte der Rohrmutter auf den Gehäuseflansch des Werkstückes beziehungsweise des Gehäuseelementes. Ferner kann die Spannfähigkeit des Spannelementes, insbesondere die der Dehnschraube, voll ausgenutzt werden. Eine derartige Befestigungseinrichtung ermöglicht eine dauerhaft dichte Befestigung zweier Gehäuseelemente einer Turbomaschine, wie einer Dampfturbine, aneinander, selbst bei sehr hohen Radkammerdrücken innerhalb des Turbinengehäuses. Wegen der großen Auflagefläche der wenigstens einen Rohrmutter an dem Werkstück beziehungsweise dem Gehäuseelement ist ein sehr guter und gleichmäßiger Wärmeübergang von dem Werkstück beziehungsweise dem Gehäuseelement in die Rohrmutter gegeben. Des Weiteren ermöglicht eine derartige Befestigungseinrichtung vorteilhafterweise eine einfache Berechnung der vorherrschenden Kräfte sowie eine kompakte Bauweise der Befestigungseinrichtung und eine enge Schraubenteilung. Die Befestigungseinrichtung stellt einen einfachen und gleichzeitig dauerhaft dichten Fugenverbinder beziehungsweise Teilfugenverbinder für wenigstens zwei Gehäuseelemente einer Turbomaschine, wie beispielsweise einer Dampfturbine, dar.

Vorzugsweise können zwei Werkstücke, wie beispielsweise zwei Gehäuseelemente einer Turbomaschine, durch zwei oder mehr derartiger Befestigungseinrichtungen sicher und dicht aneinander befestigt werden.

Zur Befestigung zweier Werkstücke aneinander wird zunächst das Spannelement gedehnt beziehungsweise gelängt. Auf das Außengewinde zumindest an einem Ende des Spannelementes wird eine erfindungsgemäße Rohrmutter, die ähnlich einer Muffe ausgebildet ist, aufgeschraubt. Die Kombination aus Spannelement und Rohrmutter wird an dem Werkstück beziehungsweise Gehäuseelement befestigt. Vorzugsweise wird die Rohrmutter in eine Gewindebohrung in dem Werkstück beziehungsweise dem Gehäuseelement eingeschraubt. Beim Zusammenziehen des gedehnten beziehungsweise gelängten Spannelementes werden die beiden Außengewinde des Spannelementes aufeinander zu bewegt. Durch das Zusammenziehen des Spannelementes wird die Rohrmutter fest gegen das Gewinde der Gewindebohrung in dem Werkstück beziehungsweise dem Gehäuseelement gedrückt. Das heißt, die Rohrmutter sitzt nach dem Zusammenziehen des Spannelementes mit ihrem speziell ausgebildeten Außengewinde besonders fest an den Aufnahmeflächen des Werkstücks, insbesondere an der Gewindebohrung des Werkstücks, an.

Vorteilhafterweise ist bei der Befestigungseinrichtung vorgesehen, dass das Außengewinde der wenigstens einen Rohrmutter als Trapezgewinde, als Sägengewinde oder als Flachgewinde ausgebildet ist. Ein Trapezgewinde stellt ein Bewegungsgewinde dar, das eine relativ große Reibung aufweist. Im Regelgewindebereich ist ein Trapezgewinde selbsthemmend, was den Vorteil hat, dass die Rohrmutter nicht unbedingt gesondert zu sichern ist. Gleiches gilt für Flachgewinde. Aufgrund ihres unsymmetrischen Profils eignen sich Sägengewinde für hohe einseitig wirkende Axialbelastungen.

Gemäß einer besonders bevorzugten Weiterentwicklung der Erfindung kann bei der Befestigungseinrichtung vorgesehen sein, dass die gradlinig ausgebildete Gewindeflanke senkrecht zu der Längsachse der wenigstens einen Rohrmutter verläuft. Hierdurch ist eine besonders hohe axiale Kraftübertragung möglich. Ferner weist eine derart ausgebildete Rohrmutter eine große Auflagefläche zur Auflage an ein entsprechendes Gewinde an einem Werkstück, insbesondere einem Gehäuseelement einer Turbomaschine, auf. Eine Rohrmutter mit einer derartigen Gewindeflanke kann selbsthemmend an einem Werkstück befestigt werden.

Bevorzugt ist ferner eine Befestigungseinrichtung, bei der die wenigstens eine Rohrmutter Aufnahmeelemente zur Drehung der Rohrmutter durch ein Betätigungswerkzeug aufweist. Damit die wenigstens eine Rohrmutter in eine Gewindebohrung, insbesondere einen Gewindeflansch, eines Werkstücks beziehungsweise eines Gehäuseelementes eingeschraubt werden kann, weist die wenigstens eine Rohrmutter Aufnahmeelemente auf. Die Aufnahmeelemente können beispielsweise durch ein sechskantförmiges Mitnahmeprofil, das heißt ein Außensechskantprofil, gebildet sein. Eine derartige Rohrmutter kann beispielsweise einfach über einen Sechskantschlüssel eingeschraubt werden. Je nach Ausgestaltung der Rohrmutter kann diese zur Aufnahme eines Betätigungswerkzeuges auch einen Längsschlitz, einen Kreuzschlitz, einen Innenvier- oder Innensechskant, einen Vielzahn, etc. aufweisen.

Gemäß einer besonders bevorzugten Weiterentwicklung der Erfindung kann bei der Vorrichtung vorgesehen sein, dass das stirnseitige Ende der wenigstens einen Rohrmutter plan ausgebildet ist. Hierdurch ist gewährleistet, dass die Stirnseite der wenigstens einen Rohrmutter vollständig an einer entsprechenden Auflagefläche des Werkstücks beziehungsweise des Gehäuseelementes anliegt.

Die wenigstens eine Rohrmutter kann verschiedenartig ausgebildet sein. Vorzugsweise ist die wenigstens eine Rohrmutter als eine Art Muffe oder Hülse ausgebildet, die an einem Ende Aufnahmeelemente zum Eingriff eines Betätigungswerkzeuges aufweist. Die Rohrmutter kann auch als Hutmutter mit einem Aufnahmeelement ausgebildet sein.

Das Spannelement der Befestigungseinrichtung weist einen elastisch dehnbaren Schaft auf. Dieser kann, wie bereits zuvor erwähnt, durch ein hydraulisches Spannwerkzeug gedehnt beziehungsweise gelängt werden. Gemäß einer weiteren bevorzugten Weiterentwicklung der Erfindung kann bei der Befestigungseinrichtung vorgesehen sein, dass das Spannelement ein Sackloch oder eine Durchgangsbohrung, das/die koaxial zur Längsachse des Spannelementes verläuft, zur Einführung eines Heizelementes aufweist. In das Sackloch beziehungsweise in die Durchgangsbohrung des Spannelementes kann ein Heizelement zur Erwärmung des Spannelementes, insbesondere zur Erwärmung des Schaftes des Spannelementes, eingeführt werden. Das Sackloch beziehungsweise die Durchgangsbohrung wird daher auch als Heizbohrung bezeichnet. Nach Erhitzung des Schaftes kann das Spannelement torsionsfrei gedehnt beziehungsweise gelängt und im gedehnten Zustand die wenigstens eine Rohrmutter um das Außengewinde des Spannelementes aufgeschraubt werden. Nach der Längung des Schaftes des Spannelementes und dem erneuten Anziehen der wenigstens einen Rohrmutter, kühlt der erhitzte Schaft des Spannelementes ab, sodass sich der Schaft des Spannelementes verkürzt und die Befestigungseinrichtung unter Vorspannung an den beiden Werkstücken anliegt. In das Sackloch beziehungsweise die Durchgangsbohrung des Spannelementes kann ein Heizstab oder eine Heizpatrone eingeführt werden. Insbesondere kann der Schaft des Spannelementes auch induktiv erhitzt werden um gelängt zu werden. Das Spannelement ist vorzugsweise als Dehnschraube, insbesondere als Stiftschraube oder als Durchsteckschraube, ausgebildet.

Bevorzugt ist ferner eine Befestigungsvorrichtung, bei der ein Sicherungselement zum Halten der wenigstens eine Rohrmutter an einem der Werkstücke vorgesehen ist. Beispielsweise kann die Befestigungsvorrichtung aus zwei Rohrmuttern und einem Spannelement bestehen. Eine erste Rohrmutter wird zunächst an einem ersten Werkstück, insbesondere einem ersten Gehäuseelement, befestigt. Damit diese bei der Befestigung der zweiten Rohrmutter an dem zweiten Werkstück, insbesondere dem zweiten Gehäuseelement, sich nicht wieder verdreht beziehungsweise axial verschoben wird, kann diese mit dem Sicherungselement an dem Werkstück beziehungsweise dem Gehäuseelement gesichert werden. Das Sicherungselement hält somit die erste Rohrmutter unbeweglich an dem ersten Werkstück fest. Das Sicherungselement weist vorzugsweise eine Sicherungsschraube auf. Ferner kann das Sicherungselement ein gewinkelt ausgebildetes Element aufweisen, über das die erste Rohrmutter mittels der Sicherungsschraube an dem ersten Werkstück gehalten werden kann. Das abgewinkelt ausgebildete Element hat die Funktion als so genanntes Gegenhaltelement.

Gemäß dem zweiten Aspekt der Erfindung wird die Aufgabe durch die Verwendung einer Befestigungseinrichtung gemäß dem ersten Aspekt der Erfindung zum kraftschlüssigen Verbinden zweier Gehäuseelemente einer Turbomaschine, insbesondere einer Dampfturbine, gelöst. Insbesondere durch die Verwendung mehrerer derartiger Befestigungseinrichtungen können zwei Gehäuseelemente einer Turbomaschine, insbesondere zwei Gehäuseelemente einer Dampfturbine, sicher und dauerhaft dicht aneinander befestigt werden. Insbesondere können durch derartige Befestigungseinrichtungen Fugen beziehungsweise Teilfugen zwischen Gehäuseelementen einer Turbomaschine, wie einer Dampfturbine, auch dann dauerhaft dicht gehalten werden, wenn die Turbomaschine hohen thermischen Belastungen und hohen Drücken ausgesetzt ist.

Die Erfindung und ihre Weiterbildungen sowie deren Vorteile werden nachfolgend anhand von Zeichnungen näher erläutert. Es zeigen jeweils schematisch:
- Figur 1: in einer Seitenansicht einen Schnitt durch eine Befestigungseinrichtung gemäß dem Stand der Technik,
- Figur 2: in einer Seitenansicht einen Schnitt durch eine erste Ausführungsvariante einer Befestigungseinrichtung nach dem erfindungsgemäßen Konstruktionsprinzip,
- Figur 3: in einer Seitenansicht einen Schnitt durch die erste Ausführungsvariante der Befestigungseinrichtung gemäß Fig. 2 im Befestigungszustand an zwei Werkstücken,
- Figur 4: in einer Seitenansicht einen Schnitt durch eine zweite Ausführungsvariante einer Befestigungseinrichtung nach dem erfindungsgemäßen Konstruktionsprinzip im Befestigungszustand an zwei Werkstücken.

Elemente mit gleicher Funktion und Wirkungsweise sind in den Figuren 1 bis 4 jeweils mit denselben Bezugszeichen versehen.

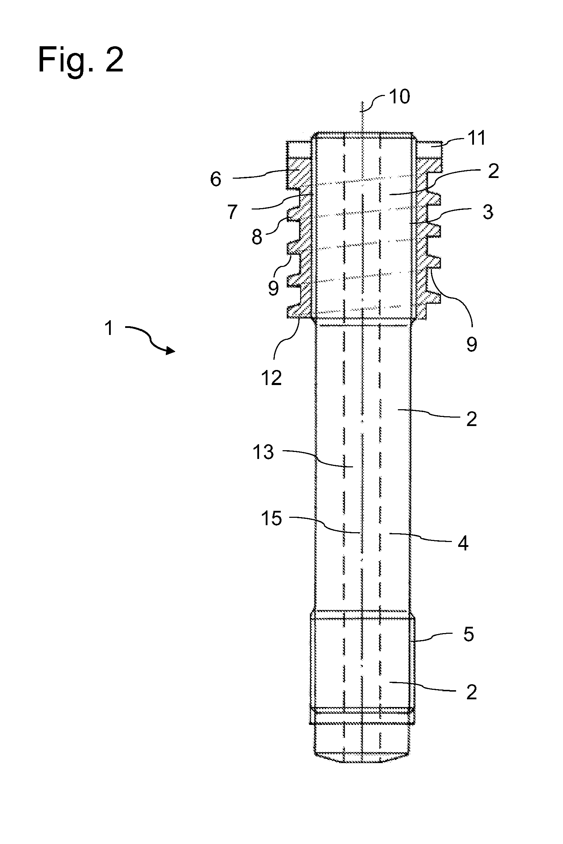

In der Fig. 2 ist in einer Seitenansicht ein Schnitt durch eine erste Ausführungsvariante einer Befestigungseinrichtung 1 nach dem erfindungsgemäßen Konstruktionsprinzip dargestellt. Die Befestigungseinrichtung 1 weist ein Spannelement 2 sowie eine Rohrmutter 6 auf. Das Spannelement 2 umfasst ein erstes Außengewinde 3, ein zweites Außengewinde 5 sowie einen elastisch dehnbaren Schaft 4 zwischen dem ersten Außengewinde 3 und dem zweiten Außengewinde 5. Die Rohrmutter 6 weist ein Innengewinde 7 zur Aufnahme des ersten Außengewindes 3 des Spannelementes 2 auf. Ferner weist die Rohrmutter 6 ein Außengewinde 8 auf, über das die Rohrmutter 6 an einem Werkstück, beispielsweise an einem Gehäuseelement einer Turbomaschine, befestigt werden kann. Das Außengewinde 8 der Rohrmutter 6 weist eine gradlinig ausgebildete Gewindeflanke 9 auf. Die Gewindeflanke 9 kann alternativ auch annähernd geradlinig ausgebildet sein. Die gradlinig ausgebildete Gewindeflanke 9 ist derart an der wenigstens einen Rohrmutter 6 angeordnet, dass sie im Befestigungszustand der wenigstens einen Rohrmutter 6 an dem ersten Außengewinde 3 des Spannelementes 2 dem anderen Außengewinde 5 des Spannelementes 2 zugewandt ist. Das Außengewinde 8 der Rohrmutter 6 ist als Trapezgewinde ausgebildet. Alternativ hierzu kann das Außengewinde 8 der Rohrmutter 6 auch als Flachgewinde oder als Sägengewinde ausgebildet sein. Die Rohrmutter 6 weist Aufnahmeelemente 11 auf, die zum Eingriff eines Betätigungswerkzeuges dienen. Diese Aufnahmeelemente 11 können beispielsweise durch eine Sechskantschraube am Ende der Rohrmutter 6 gebildet sein. Durch die Aufnahmeelemente 11 kann die Rohrmutter 6 gedreht werden. Das Spannelement 2 der Befestigungseinrichtung 1 weist ferner eine Durchgangsbohrung 14 auf, die koaxial zur Längsachse 15 des Spannelementes 2 verläuft. Die Durchgangsbohrung 14 dient zur Aufnahme eines Heizelementes, beispielsweise einer Heizpatrone. Hierdurch kann der Schaft 4 des Spannelementes 2 erwärmt und gelängt werden.

Zur Befestigung der beiden Werkstücke 21, 22 aneinander wird zunächst die Rohrmutter 6 in die Bohrung in dem ersten Werkstück 21 eingeschraubt. Anschließend wird das Spannelement 2 in die Rohrmutter 6 eingeschraubt. Das zweite Außengewinde 5 des Spannelementes 2 wird in eine entsprechende Gewindebohrung des zweiten Werkstückes 22 eingeschraubt, wohingegen das erste Außengewinde 3 des Spannelementes 2 in das Innengewinde 7 der Rohrmutter 6 eingeschraubt wird.

In die Durchgangsbohrung 14 des Spannelementes 2 wird ein Heizelement, beispielsweise eine Heizpatrone, eingeführt, die den Schaft 4 des Spannelementes 2 erwärmt. Nach erfolgter Erwärmung kann der Schaft 4 des Spannelementes 2 gelängt werden. Damit die Rohrmutter 6 die Längung nicht unterbindet, liegt die Rohrmutter 6 mit einem bestimmten Spiel S in dem Gewinde der Bohrung des ersten Werkstückes 21 ein. Hierdurch kann die Rohrmutter 6 bei einer Längung des Schaftes 4 des Spannelementes 2 in die Bohrung in dem ersten Werkstück 21 axial bewegt werden. Durch die Längung des Schaftes 4 des Spannelementes 2 wird die Rohrmutter 6 axial verschoben, das heißt etwas aus der Bohrung in dem ersten Werkstück 21 heraus bewegt. Durch eine Drehung der Rohrmutter 6 um das Außengewinde 3 des Spannelementes 2 kann das stirnseitige Ende 12 der Rohrmutter 6 erneut gegen die Anlagefläche in der Bohrung des ersten Werkstückes 21 angelegt werden. Nach dem Erkalten des Schaftes 4 des Spannelementes 2 zieht sich der Schaft 4 wieder zusammen und übt so eine erhöhte Vorspannkraft auf die beiden Werkstücke 21, 22 aus. Das heißt, die Befestigungseinrichtung 1 beziehungsweise der erkaltete Schaft 4 des Spannelementes 2 der Befestigungseinrichtung 1 presst die beiden Werkstücke 21, 22 an der Teilfuge 19 fest aneinander, sodass diese bei thermischen Beanspruchungen unter hohem Druck dauerhaft dicht ist.

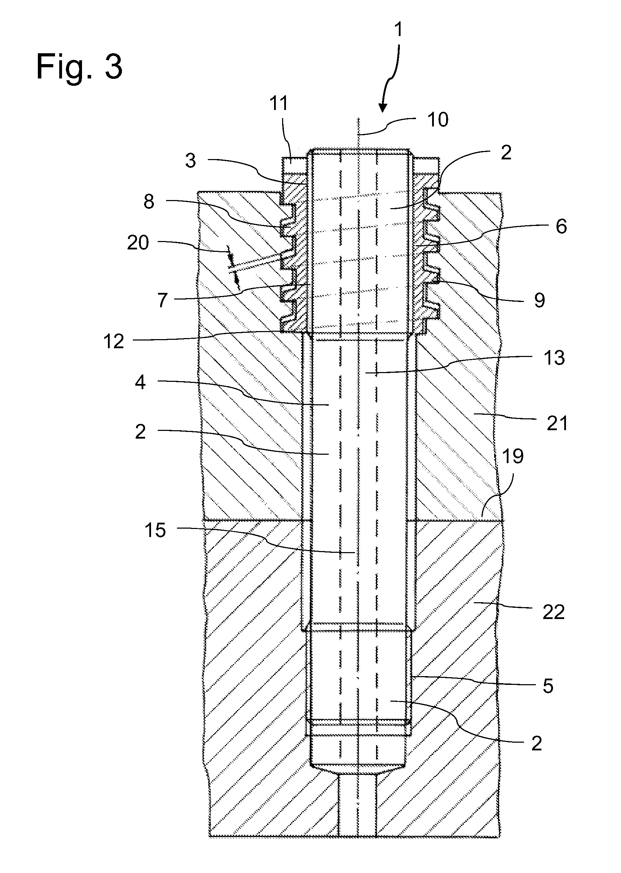

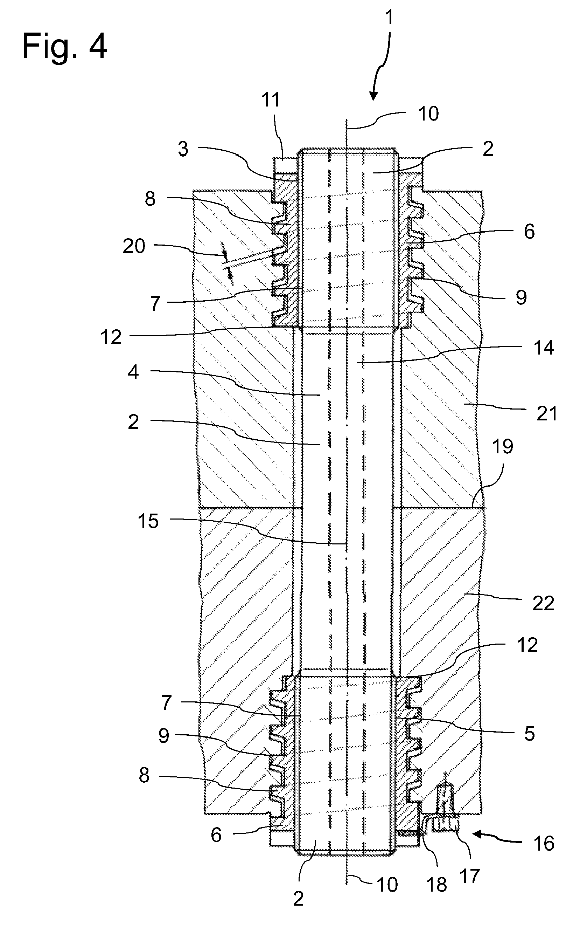

In der Fig. 4 ist in einer Seitenansicht ein Schnitt durch eine zweite Ausführungsvariante einer Befestigungseinrichtung 1, die nach dem erfindungsgemäßen Konstruktionsprinzip ausgebildet ist, dargestellt. Wie in Fig. 3 ist in der Fig. 4 die Befestigungseinrichtung 1 im Befestigungszustand an zwei Werkstücken 21, 22 gezeigt. Im Unterschied zu der in Fig. 3 dargestellten Ausführungsvariante der Befestigungseinrichtung 1 ist das Spannelement 2 nicht direkt in dem zweiten Werkstück 22 eingeschraubt, sondern mittels einer zweiten Rohrmutter 6 an dem zweiten Werkstück 22 fixiert. Das heißt, das als Durchsteckdehnschraube ausgebildete Spannelement 2 wird sowohl am ersten Werkstück 21, als auch am zweiten Werkstück 22 jeweils mit einer speziell ausgebildeten Rohrmutter 6 befestigt. Zunächst wird eine Rohrmutter 6 in die Gewindebohrung in dem zweiten Werkstück 22 eingeschraubt. Das heißt, die Rohrmutter 6 wird auf das Spezialgewinde der Bohrung in dem zweiten Werkstück 22 eingeschraubt, bis das stirnseitige Ende 12 der Rohrmutter 6 an einer entsprechenden Anlagefläche in der Bohrung des zweiten Werkstückes 22 plan anliegt. Damit die in das zweite Werkstück 22 eingeschraubte Rohrmutter 6 fest in der Bohrung des zweiten Werkstückes 22 fixiert bleibt, wird diese durch ein Sicherungselement 16 an einem zweiten Werkstück 22 festgehalten. Das Sicherungselement 16 umfasst eine Sicherungsschraube 17 und ein Gegenhaltelement 18. Die Sicherungsschraube 17 wird in das zweite Werkstück 22 eingeschraubt. Das Gegenhaltelement 18 wird durch die Sicherungsschraube 17 gehalten und hält dabei das zweite Werkstück 22 in der eingeschraubten Position. Anschließend wird eine zweite Rohrmutter 6 in die entsprechende Bohrung in dem ersten Werkstück 21 eingeschraubt. Das Spannelement 2 wird durch die Rohrmutter 6 in dem ersten Werkstück 21 eingeschraubt, bis das zweite Außengewinde 5 des Spannelementes 2 in die Rohrmutter 6 in dem zweiten Werkstück 22 eingeschraubt ist. Das erste Außengewinde 3 des Spannelementes 2 ist dann entsprechend in das Innengewinde 7 der Rohrmutter 6 in dem ersten Werkstück 21 eingeschraubt. Nach der Einführung eines Heizelementes in die Durchgangsbohrung 14 des Spannelementes 2, kann der Schaft 4 des Spannelementes 2 gelängt werden. Diese Längung wird durch das vorhandene Spiel zwischen dem Außengewinde 8 der Rohrmutter 6 und den entsprechenden Spezialgewinden der Bohrungen in den Werkstücken 21, 22 ermöglicht. Das Sicherungselement 16 stellt sicher, dass die in dem zweiten Werkstück 22 eingeschraubte Rohrmutter 6 fest an der Anlagefläche in der Bohrung beziehungsweise an dem Gewinde in der Bohrung des zweiten Werkstückes 22 anliegen bleibt, während die Rohrmutter 6 in dem ersten Werkstück 21 erneut angezogen wird. Nach dem Erkalten des gelängten Schaftes 4 des Spannelementes 2 zieht sich dieser zusammen, sodass die beiden Werkstücke 21, 22 mit einer erhöhten Vorspannkraft im Bereich der Teilfuge 19 aneinander gepresst werden. Hierdurch ist eine dauerhaft dichte Verbindung im Bereich der Teilfuge 19 zwischen den beiden Werkstücken 21, 22 gegeben.

Derartige Befestigungseinrichtungen können insbesondere zur Befestigung zweier Gehäuseelemente einer Turbomaschine, wie beispielsweise einer Dampfturbine, verwendet werden. Hierbei werden die beiden Gehäuseelemente vorteilhafterweise durch eine Vielzahl derartiger Befestigungseinrichtungen aneinander befestigt. Durch die von dem Schaft des Spannelementes der Befestigungseinrichtung ausgeübte Vorspannkraft kann gewährleistet werden, dass die Gehäuseelemente der Turbomaschine auch bei hoher thermischer Belastung und hohen Drücken dauerhaft dicht aneinander gepresst werden. Durch die spezielle Ausgestaltung der Rohrmutter(n) der Befestigungseinrichtung sowie des zumindest einen Spezialgewindes der Bohrungen in den Werkstücken beziehungsweise den Gehäuseelementen kann der elastische Schaft des Spannelementes beziehungsweise die Dehnung des elastischen Schaftes des Spannelementes voll ausgenutzt werden. Der Einsatz derartiger Befestigungseinrichtungen ermöglicht, dass Turbomaschinen, insbesondere Dampfturbinen, mit sehr hohen Radkammerdrücken betrieben werden können. Aufgrund der großen Anlagefläche des Außengewindes der wenigstens einen Rohrmutter der Befestigungseinrichtung ist ein sehr guter und gleichmäßiger Wärmeübergang in die Befestigungseinrichtung gegeben. Die erfindungsgemäße Befestigungseinrichtung ermöglicht eine einfache Berechnung der erforderlichen aufzubringenden Kräfte sowie eine kompakte Bauweise der Gehäuseelemente einer Turbomaschine.

## Patentansprüche

1. Befestigungseinrichtung (1) zum kraftschlüssigen Verbinden zweier Werkstücke (21, 22) aneinander, umfassend ein Spannelement (2) zum Verbinden der Werkstücke (21, 22), wobei das Spannelement (2) ein erstes Außengewinde (3), ein zweites Außengewinde (5) und einen zwischen dem ersten (3) und dem zweiten Außengewinde (5) angeordneten elastisch dehnbaren Schaft (4) aufweist, und wenigstens eine Rohrmutter (6) mit einem Innengewinde (7) zur Aufnahme eines der Außengewinde (3, 5) des Spannelementes (2), **dadurch gekennzeichnet, dass** die wenigstens eine Rohrmutter (6) ein Außengewinde (8) mit einer gradlinig oder annähernd geradlinig ausgebildeten Gewindeflanke (9) aufweist, wobei die zumindest eine gradlinig oder annähernd geradlinig ausgebildete Gewindeflanke (9) derart an der wenigstens einen Rohrmutter (6) angeordnet ist, dass sie im Befestigungszustand der wenigstens einen Rohrmutter (6) an einem der beiden Außengewinde (3, 5) des Spannelementes (2) dem anderen Außengewinde (3, 5) des Spannelementes (2) zugewandt ist.

2. Befestigungseinrichtung (1) nach Anspruch 1, **dadurch gekennzeichnet, dass** das Außengewinde (8) der wenigstens einen Rohrmutter (6) als Trapezgewinde, als Sägengewinde oder als Flachgewinde ausgebildet ist.

3. Befestigungseinrichtung (1) nach mindestens einem der vorhergehenden Ansprüche 1 oder 2, **dadurch gekennzeichnet, dass** die gradlinig ausgebildete Gewindeflanke (9) senkrecht zu der Längsachse (10) der wenigstens einen Rohrmutter (6) verläuft.

4. Befestigungseinrichtung (1) nach mindestens einem der vorhergehenden Ansprüche 1 bis 3, **dadurch gekennzeichnet, dass** die wenigstens eine Rohrmutter (6) Aufnahmeelemente (11) zur Drehung der Rohrmutter (6) durch ein Betätigungswerkzeug aufweist.

5. Befestigungseinrichtung (1) nach mindestens einem der vorhergehenden Ansprüche 1 bis 4, **dadurch gekennzeichnet, dass** das stirnseitige Ende (12) der wenigstens einen Rohrmutter (6) plan ausgebildet ist.

6. Befestigungseinrichtung (1) nach mindestens einem der vorhergehenden Ansprüche 1 bis 5, **dadurch gekennzeichnet, dass** die Werkstücke (21, 22) Gehäuseelemente, insbesondere Gehäuseelemente eines Turbinengehäuses, sind.

7. Befestigungseinrichtung (1) nach mindestens einem der vorhergehenden Ansprüche 1 bis 6, **dadurch gekennzeichnet, dass** die wenigstens eine Rohrmutter (6) als Muffe oder Hülse ausgebildet ist.

8. Befestigungseinrichtung (1) nach mindestens einem der vorhergehenden Ansprüche 1 bis 7, **dadurch gekennzeichnet, dass** das Spannelement (2) ein Sackloch oder eine Durchgangsbohrung (14) das/die koaxial zur Längsachse (15) des Spannelementes (2) verläuft, zur Einführung eines Heizelementes aufweist.

9. Befestigungseinrichtung (1) nach mindestens einem der vorhergehenden Ansprüche 1 bis 8, **dadurch gekennzeichnet, dass** das Spannelement (2) als Dehnschraube, insbesondere als Stiftschraube oder als Durchsteckschraube, ausgebildet ist.

10. Befestigungseinrichtung (1) nach mindestens einem der vorhergehenden Ansprüche 1 bis 9, **dadurch gekennzeichnet, dass** ein Sicherungselement (16) zum Halten der wenigstens einen Rohrmutter (6) in einem der Werkstücke (21, 22) vorgesehen ist.

11. Befestigungseinrichtung (1) nach Anspruch 10, **dadurch gekennzeichnet, dass** das Sicherungselement (16) eine Sicherungsschraube (17) und ein Gegenhaltelement (18) umfasst.

12. Verwendung einer Befestigungseinrichtung (1) gemäß wenigstens einem der vorherigen Ansprüche 1 bis 11 zum kraftschlüssigen Verbinden zweier Gehäuseelemente (21, 22) einer Turbomaschine, insbesondere einer Dampfturbine.
